# EUROPÄISCHE PATENTANMELDUNG

(11) **EP 4 086 307 A1**
(43) Veröffentlichungstag der Anmeldung: **09.11.2022**
(21) Anmeldenummer: 22170556.9
(22) Anmeldetag: 28.04.2022
(51) Int. Cl.: C08L 27/16, C08K 3/34, C08K 3/30

(54) **FLUORKAUTSCHUKMISCHUNG, DICHTUNG AUS EINER SOLCHEN FLUORKAUTSCHUKMISCHUNG SOWIE WELLENDICHTRING MIT EINEM DICHTKÖRPER**

(30) Priorität: 04.05.2021 DE 102021002431
(71) Anmelder: KACO GmbH + Co. KG, 74912 Kirchardt (DE)
(72) Erfinder: Birkhold, Detlef, 74211 Leingarten (DE); Lindenberger, Marian, 74385 Pleidelsheim (DE)
(74) Vertreter: Kohl, Karl-Heinz

(57) **Zusammenfassung**

Die Fluorkautschukmischung hat mindestens etwa 50 Gewichtsanteile eines aminresistenten Fluorkautschuks und mineralische Füllstoffe mit einem Gewichtsanteil von etwa 2 bis etwa 80 pro 100 Gewichtsanteile Fluorkautschuk. Wegen des aminresistenten Fluorkautschuks weist dieser Werkstoff eine sehr gute Medienbeständigkeit gegenüber den Getriebeölen auf, die insbesondere im Bereich der E-Mobilität eingesetzt werden. Außerdem kann dieser Werkstoff für sehr hohe Drehzahlen der abzudichtenden Welle (4) eingesetzt werden, wobei unter hohen Drehzahlen Werte von etwa 8000 U/min und höher zu verstehen sind. Die Füllstoffe sorgen dafür, dass die Abrieb- und Verschleißeigenschaften der Fluorkautschukmischung bzw. die aus ihr hergestellten Dichtungen für die hohen Umfangsgeschwindigkeit bei High-Speed-Anwendungen optimal geeignet sind. Der Abrieb bzw. der Verschleiß ist auch bei hohen Umfangsgeschwindigkeiten gering, so dass der Werkstoff bzw. die daraus hergestellten Dichtungen eine lange Einsatzdauer haben.

## Beschreibung

Die Erfindung betrifft eine Fluorkautschukmischung nach Anspruch 1, eine Dichtung nach Anspruch 14 sowie einen Wellendichtring nach Anspruch 15.

Durch die Elektrifizierung in der Automobilbranche ergeben sich neue Anforderungen an Dichtsysteme. Als Dichtsysteme werden beispielsweise Radialwellendichtungen eingesetzt, deren Dichtkörper aus Fluorkautschuk-Polymeren besteht. Sie sind allerdings gegenüber vielen, insbesondere in der E-Mobilität eingesetzten Getriebeölen, unbeständig. Hinzu kommt, dass in diesem Bereich die Wellen sehr hohe Drehzahlen haben, die beispielsweise 8000 U/min und mehr betragen. Bei diesen Rahmenbedingungen werden an das Material der Dichtungen entsprechend hohe Anforderungen gestellt, die durch die herkömmlichen Fluorkautschuk-Polymere nicht erfüllt werden können.

Der Erfindung liegt die Aufgabe zugrunde, einen Werkstoff anzugeben, der für Dichtsysteme geeignet ist, bei aggressiven Getriebeölen, insbesondere in der E-Mobilität verwendeten Getriebeölen, eingesetzt werden kann und für hohe Umfangsgeschwindigkeiten der Welle geeignet ist.

Diese Aufgabe wird bei der Fluorkautschukmischung erfindungsgemäß mit den Merkmalen des Anspruches 1, bei der Dichtung erfindungsgemäß mit den Merkmalen des Anspruches 14 und beim Wellendichtring erfindungsgemäß mit den Merkmalen des Anspruches 15 gelöst.

Die erfindungsgemäße Fluorkautschukmischung zeichnet sich dadurch aus, dass sie mindestens 50 Gewichtsanteile eines aminresistenten Fluorkautschuks sowie mineralische Füllstoffe mit einem Gewichtsanteil von etwa 2 bis etwa 80 Gewichtsanteilen pro 100 Gewichtsanteile Fluorkautschuk aufweist. Eine solche Fluorkautschukmischung zeichnet sich dadurch aus, dass sie wegen des aminresistenten Fluorkautschuks eine sehr gute Medienbeständigkeit gegenüber den Getriebeölen aufweist, die insbesondere im Bereich der E-Mobilität eingesetzt werden. Außerdem kann dieser Werkstoff für sehr hohe Drehzahlen der abzudichtenden Welle eingesetzt werden, wobei unter hohen Drehzahlen Werte von etwa 8000 U/min und höher zu verstehen sind. Die Füllstoffe sorgen dafür, dass die Abrieb- und Verschleißeigenschaften der Fluorkautschukmischung bzw. der aus ihr hergestellten Dichtungen für die hohen Umfangsgeschwindigkeit bei High-Speed-Anwendungen optimal geeignet sind. Der Abrieb bzw. der Verschleiß ist auch bei hohen Umfangsgeschwindigkeiten gering, so dass der Werkstoff bzw. die daraus hergestellten Dichtungen eine lange Einsatzdauer haben.

Der aminresistente Fluorkautschuk besteht in vorteilhafter Weise aus einem Copolymer aus 1,1-Difluorethen und 2,3,3,3-Tetrafluorpropen.

Der aminresistente Fluorkautschuk kann auch aus einem Terpolymer aus Ethylen, Tetrafluorethylen und Perfluormethylvinylether bestehen. Solche aminresistenten Fluorkautschuke zeichnen sich durch eine hohe Medienbeständigkeit aus.

Vorteilhaft werden solche aminresistenten Fluorkautschuke eingesetzt, deren Mooney-Viskosität zwischen etwa 20 und etwa 65 liegt, vorzugsweise bei etwa 25.

Zur Verbesserung der Abrieb- und/oder Verschleißeigenschaften enthält die Fluorkautschukmischung vorteilhaft entsprechende mineralische Füllstoffe, die vorzugsweise hell sind. Bevorzugt werden etwa 2 bis 80 Gewichtsanteile des Füllstoffes pro 100 Gewichtsanteile Fluorkautschuk zugemischt.

Um die Kälteflexibilität der Fluorkautschukmischung zu verbessern, ohne die gute Medienbeständigkeit und die geringen Abrieb/Verschleißeigenschaften zu beeinträchtigen, enthält die Fluorkautschukmischung bis zu etwa 50 Gewichtsanteilen eines kälteflexiblen Fluorkautschuks pro 100 Gewichtsanteile Gesamtfluorkautschuk. Unter Gesamtfluorkautschuk ist hierbei der aminresistente Fluorkautschuk und der kälteflexible Fluorkautschuk zu verstehen.

Um eine besonders gute Verarbeitung des Fluorkautschuk zu erzielen, sollte die Mooney-Viskosität zwischen etwa 20 und etwa 65 liegen, vorzugsweise bei etwa 25.

Zu einer guten Kälteflexibilität trägt bei, wenn der kälteflexible Fluorkautschuk einen Glasübergangspunkt von etwa - 20° C bis etwa - 40° C aufweist, vorteilhaft etwa - 30° C.

Als Füllstoff für die Fluorkautschukmischung eignet sich Calciumsilikat, das in einem Gewichtsanteil von etwa 2 bis etwa 80 pro 100 Gewichtsanteile Fluorkautschuk in der Fluorkautschukmischung enthalten ist.

Hierbei ist das Calciumsilikat vorteilhaft oberflächenmodifiziert. Bei oberflächenmodifizierten Calciumsilikaten wird das Calciumsilikat dahingehend verändert, dass eine verbesserte Oberflächenbindung mit dem Fluorkautschuk erzielt wird.

Eine vorteilhafte Ausbildung ergibt sich weiter, wenn das Calciumsilikat ein L:D-Verhältnis von etwa 3:1 aufweist. Hierbei ist L die Länge und D die Breite der einzelnen Calciumsilikat-Körper.

Vorteilhaft hat das Calciumsilikat eine mittlere Partikelgröße von etwa 2, 5 bis etwa 5 µm. Dadurch kann das Calciumsilikat problemlos in die Fluorkautschukmischung eingemischt werden.

Der Anteil des Calciumsilikats in der Fluorkautschukmischung liegt in vorteilhafter Weise bei etwa 10 bis etwa 50 Gewichtsanteilen pro 100 Gewichtsanteile Fluorkautschuk. Vorteilhaft liegt dieser Gewichtsanteil bei etwa 30 bis etwa 40.

Als weiterer guter Füllstoff kann Kieselsäure eingesetzt werden. Sie ist mit einem Gewichtsanteil von etwa 2 bis etwa 80 pro 100 Gewichtsanteile Fluorkautschuk in der Fluorkautschukmischung enthalten. Vorzugsweise beträgt der Gewichtsanteil etwa 3 bis etwa 10, insbesondere etwa 4 bis etwa 8.

Es hat sich als besonders vorteilhaft herausgestellt, wenn die Kieselsäure eine spezifische Oberfläche von etwa 90 bis etwa 250 m²/g aufweist.

Als Füllstoff eignet sich auch flusskalziniertes Kieselgur, das mit einem Gewichtsanteil von etwa 2 bis etwa 80 pro 100 Gewichtsanteile Fluorkautschuk in der Fluorkautschukmischung enthalten ist. Vorzugsweise liegt der Gewichtsanteil bei etwa 3 bis etwa 10, insbesondere bei etwa 3 bis etwa 7.

Vorteilhaft wird ein Kieselgur mit einer mittleren Partikelgröße D50 von etwa 10 bis etwa 25 µm, vorzugsweise von 14 µm, verwendet.

Als Füllstoff kann des Weiteren auch Bariumsulfat eingesetzt werden, das mit einem Gewichtsanteil von etwa 2 bis etwa 80 pro 100 Gewichtsanteile Fluorkautschuk in der Fluorkautschukmischung enthalten ist. Vorzugsweise liegt der Gewichtsanteil in einem Bereich von etwa 3 bis etwa 10, insbesondere von etwa 3 bis etwa 7.

Vorteilhaft hat das Bariumsulfat eine mittlere Partikelgröße D50 von etwa 0,3 bis etwa 25 µm, vorzugsweise von etwa 0,7 µm. Ein solches Bariumsulfat lässt sich gut in die Fluorkautschukmischung einbringen.

Die Fluorkautschukmischung kann zur Bildung eines geformten Kautschukvulkanisates vulkanisiert werden. Auf diese Weise kann eine Dichtung hergestellt werden, die aus einer solchen Fluorkautschukmischung besteht.

Das geformte Kautschukvulkanisat kann auch bei einer dynamischen Dichtung eingesetzt werden, wie einer Radial- oder einer Axialwellendichtung. Ein solcher Wellendichtring hat einen Dichtkörper, der aus der erfindungsgemäßen Fluorkautschukmischung hergestellt ist.

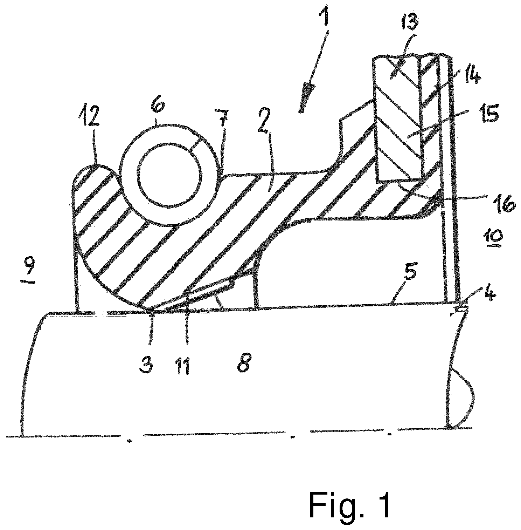

Der Anmeldungsgegenstand ergibt sich nicht nur aus dem Gegenstand der einzelnen Patentansprüche, sondern auch durch alle in der Zeichnung und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen und der Beschreibung.

Die Zeichnung zeigt im Axialabschnitt einen Teil eines erfindungsgemäßen Radialwellendichtringes mit einem Dichtkörper aus der erfindungsgemäßen Fluorkautschukmischung.

Der im Folgenden beschriebene Werkstoff wird insbesondere für Dichtungen verwendet, die im Bereich der E-Mobilität eingesetzt werden können. Der Werkstoff zeichnet sich durch eine gute Medienbeständigkeit gegenüber den im Bereich der E-Mobilität üblicherweise eingesetzten aggressiven Getriebeölen aus und ist hervorragend bei sehr hohen Drehzahlen der Welle einsetzbar. Der Einsatz ist allerdings nicht auf Anwendungen in der E-Mobilität beschränkt. Vielmehr können Dichtungen mit dem vorteilhaften Werkstoff in jeder Anwendung mit aggressiven Ölen eingesetzt werden.

Die Dichtungen sind in der Regel Radialwellendichtungen, welche die Welle umgeben und mit wenigstens einer Dichtlippe unter Radialkraft dichtend an der Welle anliegen.

Die Zeichnung zeigt beispielhaft eine solche Radialwellendichtung im Axialhalbschnitt. Da solche Radialwellendichtringe bekannt sind, werden sie nicht im Einzelnen beschrieben.

Der Radialwellendichtring hat einen Dichtkörper 1, der aus dem noch zu beschreibenden Werkstoff besteht. Der Dichtkörper 1 weist eine Dichtlippe 2 auf, die radial beweglich ist und mit einer Dichtkante 3 unter Radialkraft dichtend an einer abzudichtenden Welle 4 anliegt.

Die Dichtkante 3 liegt unter der Kraft einer Ringfeder 6 dichtend an einer Mantelfläche 5 der Welle 4 an. Die Ringfeder 6 greift in eine Ringnut 7 ein, die sich auf der Außenseite der Dichtlippe 2 in Höhe der Dichtkante 3 befindet.

In die Dichtkante 3 erstreckt sich eine Rückfördereinrichtung 8, die in bekannter Weise ausgebildet sein kann und dafür sorgt, dass unter der Dichtkante 3 von der Mediumsseite 9 zur Luftseite 10 hindurchgetretenes abzudichtendes Medium wieder zur Mediumsseite 9 zurückgeführt wird. Die Rückfördereinrichtung 8 ist in einer Kegelfläche 11 vorgesehen, die sich von der Dichtkante 3 aus in Richtung auf die Luftseite 10 öffnet.

Die Ringfeder 6 wird zur Mediumsseite 9 hin durch einen radialen Vorsprung 12 der Dichtlippe 2 gesichert.

Die auf die Dichtkante 3 wirkende Radialkraft kann auch ohne Verwendung der Ringfeder 6 erreicht werden, indem die Dichtlippe 2 so ausgebildet ist, dass sie in der Einbaulage elastisch verformt ist, wodurch auf die Dichtkante 3 eine Radialkraft wirkt.

Die Dichtlippe 2 setzt sich in eine einen Stützkörper 13 zumindest teilweise bedeckende Ummantelung 14 fort. Im Ausführungsbeispiel ist die der Luftseite 10 zugewandte Außenseite des Stützkörpers 13 von der Ummantelung 14 bedeckt. An der der Mediumsseite 9 zugewandten Außenseite des Stützkörpers 13 erstreckt sich die Ummantelung 14 nur im radial inneren Bereich.

Der Stützkörper 13 weist in bekannter Weise L-förmigen Querschnitt auf. Der radial verlaufende Teil 15 des Stützkörpers 13 bildet dessen Boden, in dem zentrisch eine Durchgangsöffnung 16 für die Welle 4 vorgesehen ist. Der Rand der Durchtrittsöffnung 16 ist von der Ummantelung 14 bedeckt.

Der Boden 15 setzt sich in einen koaxial zur Achse der Radialwellendichtung bzw. des Dichtkörpers 1 verlaufenden zylindrischen (nicht dargestellten) Mantel fort, der zumindest an seiner äußeren Mantelfläche zumindest teilweise von der Ummantelung 14 bedeckt ist. Mit dem zylindrischen Abschnitt wird die Radialwellendichtung in einen Einbauraum eines Gehäuses oder dergleichen in bekannter Weise eingepresst, wobei die diesen zylindrischen Abschnitt außenseitig bedeckende Ummantelung 14 die statische Abdichtung bildet.

Das Material zur Herstellung des Dichtkörpers 1 mit der Dichtlippe 2 und der Ummantelung 14 besteht aus einer Fluorkautschukmischung. Sie basiert auf einem aminresistenten Fluorkautschuk (FKM), der aus einem Copolymer aus 1, 1-Difluorethen und 2, 3, 3, 3-Tetrafluorpropen oder aus einem Terpolymer aus Ethylen, Tetrafluorethylen und Perfluormetylvinylether bestehen kann.

Kautschukrezepte werden in der industriellen Praxis (Gummiverarbeitung) immer auf 100 Gewichtsanteilen Polymer aufgebaut. Dadurch ergibt sich eine Summe an Gewichtsanteilen, die immer größer 100 ist. Die Gewichtsprozente der einzelnen Stoffe ergeben sich aus dem Verhältnis ihrer Gewichtsanteile zur Summe aller Gewichtsanteile der Mischung.

Die Mischung enthält wenigstens 50 Gewichtsanteile des Copolymers oder des Terpolymers.

Der aminresistente Fluorkautschuk hat vorteilhaft eine Mooney-Viskosität in einem Bereich zwischen 20 und 65 Mooney. Vorteilhaft beträgt die Mooney-Viskosität 25 Mooney (ML 1+10 @ 121° C).

Da die Welle 4 bei Elektroantrieben mit hohen Drehzahlen dreht, beispielsweise ab etwa 8000 U/min, werden sehr hohe Anforderungen an die Abriebs- und Verschleißeigenschaft des Werkstoffes gestellt. Um diese Abriebs- und Verschleißeigenschaften für die hohen Umfangsgeschwindigkeiten bei High-Speed-Anwendungen zu erzielen, werden mineralische Füllstoff eingemischt, die in einem Gewichtsanteil zwischen 5 und 80 Gewichtsanteilen pro 100 Gewichtsanteile Fluorkautschuk vorliegen.

Die Fluorkautschukmischung mit dem aminresistenten Fluorkautschuk sowie den mineralischen Füllstoffen ergibt ein Material, das eine sehr gute Medienbeständigkeit gegenüber den Getriebeölen in Kombination mit sehr hohen Drehzahlen, etwa ab 8000 U/min, gewährleistet.

Die beschriebene Fluorkautschukmischung kann zur Bildung eines geformten Kautschukvulkanisates vulkanisiert werden. Ein solches geformtes Kautschukvulkanisat ist bei der beispielhaft beschriebenen und dargestellten Radialwellendichtung der Dichtkörper 1 mit der Dichtlippe 2 und der Ummantelung 14. Die Herstellung dieses Dichtkörpers 1 erfolgt in bekannter Weise.

Das geformte Kautschukvulkanisat wird, wie anhand des Ausführungsbeispieles beschrieben, als dynamische Dichtung verwendet, vorzugsweise als Dichtring. Er kann ein Radial- oder auch ein Axialwellendichtring sein.

Um die Kälteflexibilität der Fluorkautschukmischung zu verbessern, kann ein kälteflexibler Kautschuk eingemischt werden. Es können bis zu 50 Gewichtsanteile des kälteflexiblen Fluorkautschuk pro 100 Gewichtsanteile Gesamtfluorkautschuk eingesetzt werden. Unter Gesamtfluorkautschuk ist der aminresistente Fluorkautschuk zusammen mit dem kälteflexiblen Fluorkautschuk zu verstehen.

Die Mooney-Viskosität des kälteflexiblen Fluorkautschuks kann zwischen 20 und 65 Mooney (ML 1+10 @ 121° C) betragen, vorzugsweise etwa 25 Mooney.

Vorteilhaft hat das kälteflexible Fluorkautschuk einen Glasübergangspunkt von etwa - 20° C bis etwa - 40° C. Vorteilhaft liegt der Glasübergangspunkt bei - 30° C. Unter dem Glasübergangspunkt oder der Glasübergangstemperatur ist diejenige Temperatur zu verstehen, bei welcher der kälteflexible Fluorkautschuk vom flüssigen oder gummielastischen, flexiblen Zustand in einen glasigen oder hartelastischen, spröden Zustand übergeht.

Um die gute Kälteflexibilität bzw. die Tieftemperaturbeständigkeit zu verbessern, kann dem Fluorkautschuk beispielsweise Perfluormethyvinylether zugesetzt werden.

Als Füllstoffe für die Fluorkautschukmischung kommen beispielhaft auch oberflächenmodifizierte Calciumsilikate in Betracht. Sie sind in einem Gewichtsanteil von etwa 5 bis 60 pro 100 Gewichtsanteile Fluorkautschuk in der Mischung enthalten. Vorteilhaft liegt das L:D-Verhältnis (Länge zu Breite der Silikate) der Calciumsilikate bei etwa 3 zu 1. Die einzelnen Silikate haben vorteilhaft eine mittlere Partikelgröße D 50. D50 bedeutet, dass 50 Prozent der Partikel an Calciumsilikat kleiner sind als der angegebene Wert. Die Partikelgröße liegt vorteilhaft in einem Bereich von etwa 2,5 bis 5 µm.

Bevorzugte Gewichtsanteile der oberflächenmodifizierten Calciumsilikate liegen bei etwa 10 bis etwa 50 Gewichtsanteilen pro 100 Gewichtsanteile Fluorkautschuk. Vorteilhaft liegt der Gewichtsanteil des Calciumsilikates zwischen etwa 30 und etwa 40 pro 100 Gewichtsanteile Fluorkautschuk.

Eine weitere Möglichkeit des der Fluorkautschukmischung beizumischenden Füllstoffes sind Kieselsäuren. Sie werden mit einem Gewichtsanteil von etwa 2 bis etwa 20 pro 100 Gewichtsanteile Kautschuk zugesetzt. Vorteilhaft haben die Kieselsäuren eine spezifische Oberfläche zwischen etwa 90 bis etwa 250 m²/g. Bevorzugte Gewichtsanteile liegen zwischen etwa 3 und 10 pro 100 Gewichtsanteilen Fluorkautschuk. Ein besonders bevorzugter Bereich liegt bei 4 bis 8 Gewichtsanteilen pro 100 Gewichtsanteilen Fluorkautschuk.

Als Füllstoff kommt auch flusskalziniertes Kieselgut in Betracht. Es kann in einem Gewichtsanteil von etwa 2 bis etwa 20 pro 100 Gewichtsanteile Fluorkautschuk vorhanden sein. Dieses Kieselgur hat eine mittlere Partikelgröße D50 von 10 bis 25 µm. Bevorzugt ist die Partikelgröße etwa 14 µm.

Bevorzugt liegen die Gewichtsanteile an flusskalziniertem Kieselgur im Bereich von 3 bis 10 pro 100 Gewichtsanteile Fluorkautschuk. Eine besonders vorteilhafte Mischung ergibt sich, wenn der Gewichtsanteil an flusskalziniertem Kieselgur in einem Bereich zwischen etwa 3 bis etwa 7 pro 100 Gewichtsanteile Fluorkautschuk liegt.

Eine weitere Möglichkeit eines Füllstoffes ist Bariumsulfat. Es kann mit einem Gewichtsanteil von etwa 2 bis etwa 80 pro 100 Gewichtsanteilen Fluorkautschuk zugegeben werden. Ein vorteilhafter Bereich liegt zwischen etwa 3 und etwa 10 Gewichtsanteilen, insbesondere bei etwa 3 bis etwa 7 Gewichtsanteilen.

Das Bariumsulfat hat in vorteilhafter Weise eine Partikelgröße D50 von etwa 0,3 bis etwa 25 µm, vorzugsweise von etwa 0,7 µm.

In den beschriebenen Fluorkautschukmischungen werden zur Vernetzung organische Peroxide in einem Bereich von etwa 0,5 bis etwa 3 Gewichtsanteilen pro 100 Gewichtsanteile Fluorkautschuk eingesetzt.

Nachfolgend werden zwei Zusammensetzungsbeispiele der Fluorkautschukmischung angegeben. Die eingesetzten Komponenten sind im Handel erhältlich.

### Beispiel 1

aminresistenter FKM (DAI EL GBR 6002, hergestellt von Daikin Chemicals, Mooneyviskosität ML1+10 @ 121 °C 25): 100 Gewichtsanteile
Oberflächenmodifziertes Calciumsilikat (Tremin 283-600 EST, hergestellt von Quarzwerke): 38 Gewichtsanteile
Kieselsäure (Aerosil R972, hergestellt von Evonik): 7 Gewichtsanteile
Flusskalziniertes Kieselgur (Celite 499, hergestellt von Lehmann und Voss): 6 Gewichtsanteile
TAIC (hergestellt von Kettlitz) 1,5 Gewichtsanteile
Peroxid (Peroxan BIB-1, hergestellt von Pergan) 1 Gewichtsanteil.

### Beispiel 2

aminresistenter FKM (DAI EL GBR 6002, hergestellt von Daikin Chemicals, Mooneyviskosität ML1+10 @ 121 °C 25): 60 Gewichtsanteile
Kälteflexibler FKM (DAI EL LT 304, hergestellt von Daikin Chemicals, Mooneyviskosität ML1+10 @ 121 °C 25) 40 Gewichtsanteile
Oberflächenmodifziertes Calciumsilikat (Tremin 283-600 EST, hergestellt von Quarzwerke): 38 Gewichtsanteile
Kieselsäure (Aerosil R972, hergestellt von Evonik): 7 Gewichtsanteile
Flusskalziniertes Kieselgur (Celite 499, hergestellt von Lehmann und Voss): 6 Gewichtsanteile
TAIC (hergestellt von Kettlitz) 1,5 Gewichtsanteile
Peroxid (Peroxan BIB-1, hergestellt von Pergan) 1 Gewichtsanteil.
Beim aminbeständigen Fluorkautschuk (FKM) hat die angegebene Mooney-Viskosität ML 1+10 @ 121° C folgende Bedeutung:
   ML = großer Prüfrotor (Nach Mooney-Norm 53523)
   1 = Vorwärmzeit in Minuten
   10 = Prüfzeit in Minuten
   121° C = Prüftemperatur in °C

Die Mooney-Viskosität wird mittels eines Mooney-Viskositätversuches zur Bestimmung der Eigenschaften nicht vulkanisierter Kautschukmaterialien ermittelt. Die Probe wird für eine bestimmte Zeit vorgewärmt und dann mit einer konstanten Schergeschwindigkeit belastet. Die Mooney-Viskosität wird ab Ende dieser Deformationsphase aufgezeichnet.

Zur Herstellung der Fluorkautschukmischung wird ein Kautschukinnenmischer eingesetzt. Der gesamte Anteil des Fluorkautschuks wird in den Innenmischer gegeben. Nach 45 Sekunden einer Mastifikation wird der gesamte Anteil der Füllstoffe zugegeben. Der Fluorkautschuk mit den Füllstoffen wird für 60 Sekunden gemischt. Anschließend wird der Stempel des Innenmischers gereinigt und danach für weitere 60 Sekunden die Mischung gemischt. Dann werden das Peroxid sowie das TAIC (Triallylisocyanurat) zugegeben und für weitere 45 Sekunden gemischt. Der Stempel des Innenmischers wird erneut gereinigt und anschließend die Mischung für weitere 45 Sekunden gemischt. Anschließend wird die Fluorkautschukmischung aus dem Innenmischer ausgeworfen und auf ein Kautschukwalzwerk gegeben. Dort wird die Fluorkautschukmischung für ca. 2 bis 3 Minuten gewalzt und danach in Streifen der gewünschten Dimension abgeschnitten.

Sollte während des gesamten Mischprozesses eine Temperatur von mehr als 120° C auftreten, wird die Mischung sofort ausgeworfen.

Das TAIC dient als Coagenz für die Peroxidvernetzung und liefert gute physikalische Werte. Insbesondere positiv werden Druckverformungsrest und Festigkeit der Fluorkautschukmischung verbessert. Das Mischungsverhältnis von TAIC und Peroxid kann in einem Bereich von 1,5 zu 1 bis 2 zu 1 beispielhaft liegen.

## Patentansprüche

1. Fluorkautschukmischung mit mindestens etwa 50 Gewichtsanteilen eines aminresistenten Fluorkautschuks und mit mineralischen Füllstoffen mit einem Gewichtsanteil von etwa 2 bis etwa 80 Gewichtsanteile pro 100 Gewichtsanteile Fluorkautschuk.

2. Fluorkautschukmischung nach Anspruch 1,
**dadurch gekennzeichnet, dass** der aminresistente Fluorkautschuk aus einem Copolymer aus 1,1-Diflourethen und 2, 3, 3, 3-Tetrafuorpropen oder einem Terpolymer aus Ethylen, Tetrafluorethylen und Perfluormethylvinylether besteht.

3. Fluorkautschukmischung nach Anspruch 1 oder 2,
**dadurch gekennzeichnet, dass** der aminresistente Fluorkautschuk eine Mooney-Viskosität zwischen etwa 20 und etwa 65, vorzugsweise von etwa 25, aufweist.

4. Fluorkautschukmischung nach einem der Ansprüche 1 bis 3,
**dadurch gekennzeichnet, dass** die Fluorkautschukmischung zur Verbesserung der Abriebs- und/oder Verschleißeigenschaften mineralische Füllstoffe mit einem Gewichtsanteil von etwa 2 bis etwa 80 Gewichtsanteilen pro 100 Gewichtsanteile Fluorkautschuk enthält.

5. Fluorkautschukmischung nach einem der Ansprüche 1 bis 4,
**dadurch gekennzeichnet, dass** die Fluorkautschukmischung bis zu etwa 50 Gewichtsanteile eines kälteflexiblen Fluorkautschuks pro 100 Gewichtsanteile Gesamtfluorkautschuk (aminresistenter Flourkautschuk und kälteflexibler Fluorkautschuk) enthält, und dass vorteilhaft der kälteflexible Fluorkautschuk eine Mooney-Viskosität zwischen etwa 20 und etwa 65 aufweist, vorzugsweise etwa 25.

6. Fluorkautschukmischung nach Anspruch 5,
**dadurch gekennzeichnet, dass** der kälteflexible Fluorkautschuk einen Glasübergangspunkt von etwa - 20° C bis etwa - 40° C aufweist, vorzugsweise etwa - 30° C.

7. Fluorkautschukmischung nach einem der Ansprüche 4 bis 6,
**dadurch gekennzeichnet, dass** der Füllstoff vorteilhaft oberflächenmodifiziertes Calciumsilikat mit einem Gewichtsanteil von etwa 2 bis etwa 80 pro 100 Gewichtsanteile Fluorkautschuk ist.

8. Fluorkautschukmischung nach Anspruch 7,
**dadurch gekennzeichnet, dass** das Calciumsilikat ein L:D-Verhältnis von etwa 3:1 hat.

9. Fluorkautschukmischung nach einem der Ansprüche 7 oder 8,
**dadurch gekennzeichnet, dass** das Calciumsilikat eine mittlere Partikelgröße von etwa 2,5 bis etwa 5 µm hat.

10. Fluorkautschukmischung nach einem der Ansprüche 7 bis 9,
**dadurch gekennzeichnet, dass** der Anteil des Calciumsilikats bei etwa 10 bis etwa 50 Gewichtsanteilen pro 100 Gewichtsanteile Fluorkautschuk liegt, vorzugsweise bei etwa 30 bis etwa 40 Gewichtsanteilen.

11. Fluorkautschukmischung nach einem der Ansprüche 4 bis 6,
**dadurch gekennzeichnet, dass** der Füllstoff eine, vorteilhaft eine spezifische Oberfläche von etwa 90 bis etwa 250 m²/g aufweisende Kieselsäure mit einem Gewichtsanteil von etwa 2 bis etwa 80 pro 100 Gewichtsanteilen Fluorkautschuk ist, vorzugsweise etwa 3 bis etwa 10, insbesondere etwa 4 bis etwa 8.

12. Fluorkautschukmischung nach einem der Ansprüche 4 bis 6,
**dadurch gekennzeichnet, dass** der Füllstoff flusskalziniertes Kieselgur mit einem Gewichtsanteil von etwa 2 bis etwa 80 pro 100 Gewichtsanteilen Fluorkautschuk aufweist, vorzugsweise von etwa 3 bis etwa 10, insbesondere von etwa 3 bis etwa 7 Gewichtsanteilen, und dass vorteilhaft das Kieselgur eine mittlere Partikelgröße D50 von etwa 10 bis etwa 25 µm, vorzugsweise von etwa 14 µm, aufweist.

13. Fluorkautschukmischung nach einem der Ansprüche 4 bis 6,
**dadurch gekennzeichnet, dass** der Füllstoff Bariumsulfat mit einem Gewichtsanteil von etwa 2 bis etwa 80 pro 100 Gewichtsanteilen Fluorkautschuk aufweist, vorzugsweise von etwa 3 bis etwa 10, insbesondere von etwa 3 bis etwa 7 Gewichtsanteilen, und dass vorteilhaft das Bariumsulfat eine mittlere Partikelgröße D50 von etwa 0,3 bis etwa 25 µm, vorzugsweise von etwa 0,7 µm, aufweist.

14. Dichtung, bestehend aus einer Fluorkautschukmischung nach einem der Ansprüche 1 bis 13.

15. Wellendichtring mit einem Dichtkörper (1), der aus einer Fluorkautschukmischung gemäß einem der Ansprüche 1 bis 13 besteht.
